# EUROPÄISCHE PATENTSCHRIFT

(11) **EP 2 000 010 B1**
(45) Veröffentlichungstag und Bekanntmachung des Hinweises auf die Patenterteilung: **26.08.2009**
(21) Anmeldenummer: 07726635.1
(22) Anmeldetag: 05.03.2007
(51) Int. Cl.: H05B 41/28, H02M 3/335

(54) **AUSSCHALTZEITREGELUNG EINES INVERTERS ZUM BETREIBEN EINER LAMPE**
SWITCH-OFF TIME REGULATION SYSTEM FOR AN INVERTER FOR DRIVING A LAMP
REGLAGE DE L'HEURE D'ARRET D'UN ONDULEUR POUR LE FONCTIONNEMENT D'UNE LAMPE

(30) Priorität: 17.03.2006 DE 202006004296 U
(43) Veröffentlichungstag der Anmeldung: 10.12.2008
(73) Patentinhaber: Osram Gesellschaft mit beschränkter Haftung, 81543 München (DE)
(72) Erfinder: SOWA, Wolfram, 81739 München (DE)
(86) Internationale Anmeldenummer: PCT/EP2007/052055
(87) Internationale Veröffentlichungsnummer: WO 2007/107447

(56) Entgegenhaltungen:
- WO-A-96/38024
- WO-A-03/043386
- DE-A1-102004 008 908

## Beschreibung

### Technisches Gebiet

Die vorliegende Erfindung bezieht sich auf ein elektronisches Vorschaltgerät zum Betrieb einer Lampe, welches einen Klasse-E-Konverter aufweist.

### Stand der Technik

Elektronische Vorschaltgeräte zum Betrieb von Lampen sind in vielfältigen Ausführungen bekannt. Es gibt verschiedene Ausführungsformen für unterschiedliche Lampentypen mit jeweils verschiedenen Nennleistungen oder Betriebsweisen. Eine zum Betrieb angeschlossene Lampe kann beispielsweise eine Entladungslampe, insbesondere eine dielektrisch behinderte Entladungslampe sein.

Elektronische Vorschaltgeräte generieren den zum Betrieb der angeschlossenen Lampe notwendigen Lampenstrom. Dazu weisen sie einen Konverter auf. Grundsätzlich wandeln Konverter eine Leistungsversorgung des elektronische Vorschaltgerätes, beispielsweise die Netzversorgung, in eine Leistung zum Betrieb der angeschlossenen Lampe um. Dabei sind der Ausgangsstrom und die Ausgangsspannung des Konverters an den jeweils anzuschließenden Lampentyp angepasst.

Beispielsweise wandeln Klasse-E-Konverter zum Betrieb dielektrisch behinderter Entladungslampen, sog. DBD-Lampen, eine Gleichspannungsversorgung in eine gepulste Leistungsversorgung um. Die Gleichspannung zum Betrieb des Klasse-E-Konverters wird dabei üblicherweise zunächst von einem Gleichrichter aus einer Netzversorgung erzeugt.

Ein Klasse-E-Konverter weist eine Speicherspule und ein Schaltelement auf. Ist das Schaltelement geschlossen, so fließt ein mit der Zeit zunehmender Gleichstrom durch die Speicherspule. Wird das Schaltelement geöffnet, entsteht über der Speicherspule aufgrund einer abrupten Stromänderung eine hohe Induktionsspannung. Die in der Speicherspule gespeicherte Energie wird ausgekoppelt und kann so der angeschlossenen Lampe zugeführt werden. Im Anschluss daran, oder noch während des Spannungspulses über der Speicherspule, wird das Schaltelement des Klasse-E-Konverters wieder geschlossen und die Speicherspule fängt wieder an, Energie zu speichern.

Eine DBD-Lampe ist eine im Wesentlichen kapazitive Last. Der ausgekoppelte Ausgangsstrom des Klasse-E-Konverters lädt die dielektrisch behinderten Elektroden auf. Aufgrund der hohen zwischen den dielektrisch behinderten Elektroden herrschenden Spannung wird eine erste Entladung gezündet. Aufgrund einer inneren Cegenpolarisation der Lampe, und weil der Lampenlastkreis entsprechend zurückschwingt, kann eine erneute Zündung, eine Rückzündung, folgen. Hierzu wird verwiesen auf die WO00/13204 derselben Anmelderin.

Wird eine DBD-Lampe über einen Klasse-E-Konverter betrieben, so kann der Ausgangsstrom des Klasse-E-Konverters zwei Halbwellen mit entgegengesetzter Polarität aufweisen, gegebenenfalls begleitet von einer Zündung des Entladungsmediums und einer Rückzündung.

Die Erfindung richtet sich jedoch nicht nur auf elektronische Vorschaltgeräte für DBD-Lampen, sondern auch auf Vorschaltgeräte für andere Lampentypen, die mit zeitlich beabstandeten Leistungspulsen betrieben werden können, und zwar besonders auf Vorschaltgeräte für solche Lampen oder solchermaßen verschaltete Lampen, bei denen eine kapazitive Charakteristik wie bei dielektrisch behinderten Entladungslampen vorherrscht.

Offenlegungsschriff DE 102004 008908A1 offenbart ein elektronisches Vorschaltgerät nach dem Oberbegriff von Anspruch 1

### Darstellung der Erfindung

Aufgabe der Erfindung ist es, ein bzgl. seines Ausgangstromes vorteilhaftes elektronisches Vorschaltgerät mit einem Klasse-E-Konverter anzugeben.

Die Aufgabe wird gelöst durch ein elektronisches Vorschaltgerät zum Betrieb einer Lampe mit einem ein Schaltelement aufweisenden Klasse-E-Konverter zur Leistungsversorgung der anzuschließenden Lampe, wobei ein Ausgangsstrom des Klasse-E-Konverters bei angeschlossener Lampe nach einem Ausschalten des Schaltelementes eine erste und eine zweite Halbwelle entgegengesetzter Polarität aufweist, dadurch gekennzeichnet, dass das elektronische Vorschaltgerät eine Messvorrichtung zur Messung des Ausgangsstromes und eine Regelvorrichtung zum Einstellen eines Einschaltzeitpunktes des Schaltelementes aufweist,
wobei die Messvorrichtung dazu ausgelegt ist, einen ersten Ausgangsstromwert der ersten Halbwelle und einen zweiten Ausgangsstromwert der zweiten Halbwelle zu bestimmen, und wobei der Regelvorrichtung zum Einstellen des Einschaltzeitpunktes eine auf der Abweichung der beiden Ausgangsstromwerte basierende. Regelgröße zugeführt ist.

Bevorzugte Ausgestaltungen der Erfindung sind in den abhängigen Ansprüchen angegeben und werden im Folgenden näher erläutert.

Wird das Schaltelement des Klasse-E-Konverters ausgeschaltet, so tritt über der Speicherspule des Klasse-E-Konverters eine Induktionsspannung auf. Wie oben beschrieben, kann eine entsprechende Leistung, etwa über eine Sekundärspule, ausgekoppelt werden. Dabei kann der Ausgangsstrom des Klasse-E-Konverters eine erste und eine zweite Halbwelle mit entgegengesetzter Polarität aufweisen.

Die Erfindung basiert auf der an sich bekannten Tatsache, dass der Einschaltzeitpunkt des Schaltelementes des Klasse-E-Konverters sich auf die in die Lampe eingekoppelte Leistung auswirken kann.

Bei einer DBD-Lampe kann ein optimierter Einschaltzeitpunkt beispielsweise zu einer um 4 bis 7 % verbesserten Leistungseinkopplung führen.

Klasse-E-Konverter können sowohl resonant als auch nicht-resonant betrieben werden. Im resonanten Betrieb ist die Spannung über dem Schaltelement beim Einschalten des Schaltelements 0 V. Der Einschaltzeitpunkt im resonanten Betrieb liegt also zeitlich nach dem über der Speicherspule auftretenden Spannungspuls.

Im nicht-resonanten Betrieb wird das Schaltelement schon während des Spannungspulses eingeschaltet.

Der Erfinder hat festgestellt, dass sich der Einschaltzeitpunkt des Schaltelements im nicht-resonanten Betrieb stark auf den Verlauf des Ausgangsstromes bei angeschlossener Lampe auswirkt. Weist beispielsweise die erste Halbwelle des Ausgangsstromes positive Polarität auf und entsprechend die zweite Halbwelle des Ausgangsstromes negative Polarität, und wird das Schaltelement des Klasse-E-Konverters bei fallender Flanke des Ausgangsstromes eingeschaltet, so sind die Spitzenwerte und der Verlauf des Ausgangsstroms, vor allem der zweiten Halbwelle, verändert.

Das Vorgeben eines Einschaltzeitpunktes in einem zum Ausschaltzeitpunkt festen zeitlichen Abstand, beispielsweise durch einen Microcontroller oder ein einfaches. Zeitglied, ist problematisch, da der Verlauf des Ausgangsstromes für jede angeschlossene Lampe unterschiedlich sein und sogar während des Betriebes der gleichen Lampe variieren kann. Auch baugleiche Lampen können aufgrund von Produktionstoleranzen unterschiedliche kapazitive Lasten darstellen.
Sogar Veränderungen in der Umgebung einer angeschlossenen Lampe können die effektive Kapazität der Last verändern. Der zeitliche Verlauf des Ausgangsstromes kann sogar durch ein Berühren der Lampe und ein Verändern der Lage relativ zur Fassung verändert werden.

Die Erfindung basiert auf der Idee, den Einschaltzeitpunkt während des Spannungspulses, auf Grundlage des zeitlichen Verlaufs des Ausgangsstromes, einzustellen. Dies ist möglich, weil der zeitliche Verlauf des Ausgangsstromes von dem Einschaltzeitpunkt abhängt.

Dazu weist ein erfindungsgemäßes elektronisches Vorschaltgerät eine Messvorrichtung zur Messung des Ausgangsstromes auf. Dabei ist die Messvorrichtung dazu ausgelegt, einen ersten Ausgangsstromwert der ersten Halbwelle und einen zweiten Ausgangsstromwert der zweiten Halbwelle zu bestimmen. Dies kann beispielsweise eine Mittelung oder ein Integral über ein Intervall innerhalb jeder der beiden Halbwellen sein. Beide Halbwelle weisen jeweils einen Spitzenwert auf; auch dieser kann, wie unten weiter ausgeführt, der der ersten und der zweiten Halbwelle zugeordnete Ausgangsstromwert sein. Prinzipiell sind auch beliebige Funktionen des Ausgangsstromes denkbar, solange sie jeweils einen Ausgangsstromwert liefern, welcher für zumindest eine der beiden Halbwellen streng monoton mit dem Einschaltzeitpunkt variiert. Es ist z. B. möglich, dass der erste Ausgangsstromwert bzgl. einer Variation des Einschaltzeitpunktes konstant ist, der der zweiten Halbwelle zugeordnete Ausgangsstromwert jedoch mit diesem variiert.

Die Messvorrichtung kann auch zweiteilig ausgeführt sein, wobei der erste Teil der Messvorrichtung den Ausgangsstromwert für die erste Halbwelle bestimmt und der zweite Teil der Messvorrichtung den Ausgangsstromwert für die zweite Halbwelle des Ausgangsstromes bestimmt.

Das elektronische Vorschaltgerät weist weiter eine Regelvorrichtung auf, welche den Eins.chaltzeitpunkt einstellt. Als Regelgröße wird dabei der Regelvorrichtung die Abweichung der beiden Ausgangsstromwerte zugeführt. Im einfachsten Fall kann die Abweichung der beiden Ausgangsstromwerte der Differenz der Beträge der Spitzenwerte entsprechen.

In einem bevorzugten Fall kann diese Regelgröße beispielsweise der Differenz der Beträge der Spitzenwerte gemittelt über mehrere Schaltzyklen des Klasse-E-Konverters entsprechen.

Dazu weist bei einer bevorzugten Ausführungsform der Erfindung die Messvorrichtung zwei Spitzenwerterfassungsschaltungen auf. Diese sind dazu ausgelegt, als ersten Ausgangsstromwert den Spitzenwert der ersten Halbwelle in der ersten der beiden Spitzenwerterfassungsschaltungen zu erfassen und als zweiten Ausgangsstromwert den Spitzenwert der zweiten Halbwelle in der zweiten der beiden Spitzenwerterfassungsschaltungen zu erfassen. Mit Spitzenwerterfassungsschaltungen können einfach große Signale erzielt werden.

Vorzugsweise entspricht die von der Regelvorrichtung verwendete Sollgröße einer Differenz des Betrages des ersten und des Betrags des zweiten Spitzenwertes von weniger als 40 % des größeren der beiden Spitzenwerte. Bevorzugter sind Betragsdifferenzen von weniger als 30 %, 20 %, 10 %, 5 % und 1 % in der angegebenen Reihenfolge. Für etwa gleiche Betragsverhältnisse des ersten und des zweiten Spitzenwertes wird besonders viel Leistung in die angeschlossene Lampe eingekoppelt.

Bei einer bevorzugten Ausführungsform der Erfindung ist die Messvorrichtung dazu ausgelegt, den Ausgangsstrom des Klasse-E-Konverters transformatorisch zu bestimmen. Dazu kann in den Lastkreis der Lampe eine Spule eingebracht sein und die Messvorrichtung eine dazu sekundäre Spule mit einem Messwiderstand aufweisen. Über dem Messwiderstand fällt dann eine zu dem Strom in dem Lastkreis proportionale Spannung ab. Es kann allerdings auch ein Widerstand zu der Speicherspule des Klasse-E-Konverters parallel geschaltet werden, so dass an diesem eine zu dem Ausgangsstrom des Klasse-E-Konverters proportionale Spannung abfällt. Dieser Widerstand sollte hochohmig genug sein, um die Verluste in Folge des durch diesen Widerstand fließenden Stromes klein zu halten.

Vorzugsweise ist die Messvorrichtung so ausgelegt, dass Abweichungen der Ausgangsstromwerte voneinander über mehrere Schaltzyklen des Klasse-E-Konverters gemittelt werden. Eine entsprechende Schaltungsanordnung kann mit einem besonders geringen Aufwand realisiert werden.

Bei einer bevorzugten Ausführungsform der Erfindung werden die Spitzenwerte von den Spitzenwerterfassungsschaltungen in Form von Spannungen erfasst, beispielswerte in Spitzenwerterfassungsschaltungen, welche einen Kondensator und einen Widerstand aufweisen. Vorzugsweise sind die Spitzenwerterfassungsschaltungen dann mit einer Parallelschaltung aus einem Mittelungskondensator und einem Widerstand so verschaltet, dass die Spannung über dem Mittelungskondensator einen zeitabstandsgewichteten Mittelwert über die Betragsdifferenzen der beiden Spitzenwerte vergangener Schaltzyklen des Klasse-E-Konverters darstellt. Dadurch, dass dem Mittelungskondensator ein Widerstand parallel geschaltet ist, kann sich der Mittelungskondensator mit der Zeit über diesen Widerstand umladen. Die Mittelung ist in diesem Fall also kein einfaches arithmetisches Mittel, sondern die Differenzen der Beträge der Spitzenwerte aus der jüngeren Vergangenheit werden stärker gewichtet als die aus der älteren Vergangenheit (für die Funktionsweise einer entsprechenden Schaltung wird auf das Ausführungsbeispiel verwiesen).

Vorzugsweise umfasst die Regelvorrichtung auch eine Steuervorrichtung zum Schalten des Schaltelementes. Diese Steuervorrichtung umfasst ein erstes Schwellenwertelement, wobei einem ersten Eingang des Schwellenwertelementes die Regelgröße zugeführt wird und das Schwellenwertelement so mit dem Schaltelement verschaltet ist, dass das erste Schwellenwertelement das Schaltelement schalten kann. Die dem ersten Eingang zugeführte Regelgröße kann beispielsweise mit einer innerhalb des Schwellenwertelementes implementierten Schwelle verglichen werden. Es ist aber auch möglich, dass der Schwellenwert über einen weiteren Eingang des Schwellenwertelementes diesem zugeführt wird. Auf die Verschaltung des ersten Schwellenwertelementes wird im Anschluss und in dem Ausführungsbeispiel noch näher eingegangen.

Die Steuervorrichtung selbst, ohne die Regelung, kann so ausgelegt sein, dass sie eine konstante Ausschaltzeit vorgibt. Die von der Messvorrichtung bereitgestellte Regelgröße kann die Steuervorrichtung dazu veranlassen, von dieser konstanten Ausschaltzeit abzuweichen.

Bei einer bevorzugten Ausführungsform der Erfindung weist die Regelvorrichtung einen Kondensator, ein zweites Schwellenwertelement und eine Spannungsquelle auf. Dabei liegt an einem Eingang des zweiten Schwellenwertelementes ein zu dem Strom durch das Schaltelement proportionales Signal an. Dies kann etwa die Spannung über seinem in Serie zu dem Schaltelement geschalteten Messwiderstand sein. Das zweite Schwellenwertelement ist mit dem Kondensator so verschaltet, dass beim Erreichen des Schwellenwertes am Eingang des zweiten Schwellenwertelementes der Kondensator in einem ersten Sinn umgeladen, etwa entladen, wird.

Vorzugsweise weist das erste Schwellenwertelement einen zweiten Eingang auf und der Kondensator ist mit einem der beiden Eingänge des ersten Schwellenwertelementes so verschaltet, dass ein dem Ladezustand des Kondensators entsprechendes Signal diesem Eingang zugeführt wird. Wird der Kondensator über die Spannungsspule etwa geladen, so kann dieser mit beispielsweise dem zweiten Eingang des ersten Schwellenwertelementes so verschaltet sein, dass das Potential an diesem zweiten Eingang mit zunehmender Ladung des Kondensators ansteigt.

Die Steuervorrichtung ist dabei so ausgelegt, dass das Schaltelement aufgrund des ersten Umladens des Kondensators über das erste Schwellenwertelement ausgeschaltet wird. Weiter ist die Steuervorrichtung so ausgelegt, dass der Kondensator über die Spannungsquelle in dem anderen zweiten Sinn umgeladen wird, etwa aufgeladen. Schließlich schaltet das erste Schwellenwertelement das Schaltelement aufgrund des zweiten Umladens des Kondensators wieder ein, so dass insgesamt die Umladezeit des zweiten Umladens des Kondensators die Ausschaltzeit bestimmt, sofern nicht die dem ersten Schwellenwertelement zugeführte Regelgröße zu einer Abweichung führt.

Die Regelgröße kann nun einem der beiden Eingänge des ersten Schwellenwertelementes zugeführt werden und so die Ausschaltzeit modifizieren. Beispielsweise kann das Ausgabesignal der Messvorrichtung, also die Regelgröße, zu der Referenzspannung hinzugefügt werden. Eine entsprechende Verschaltung der Messvorrichtung mit der Steuervorrichtung ist im Ausführungsbeispiel gezeigt.

Bei einer bevorzugten Ausführungsform der Erfindung sind die Schwellenwertelemente Komparatoren.

Vorzugsweise ist die Steuervorrichtung dazu ausgelegt, den Kondensator über den Ausgang des zweiten Schwellenwertelementes zu entladen. Dies ist schaltungstechnisch besonders einfach.

Außerdem sind elektronische Vorschaltgeräte zum Betrieb dielektrisch behinderter Entladungslampen ein bevorzugtes Anwendungsgebiet. Dielektrisch behinderte Entladungslampen sind ein Lampentyp, welcher gut über Klasse-E-Konverter in einem Pulsverfahren betrieben werden kann und eine kapazitive Last darstellt.

Die Erfindung richtet sich auch auf ein erfindungsgemäßes elektronisches Vorschaltgerät zusammen mit einer für den Betrieb an einem solchen Vorschaltgerät geeigneten Lampe, also ein Beleuchtungssystem.

Die vorstehende und die nachfolgende Beschreibung der einzelnen Merkmale bezieht sich auf das elektronische Vorschaltgerät und das Beleuchtungssystem. Weiter bezieht sie sich auch auf ein der Erfindung entsprechendes Verfahren zum Betrieb einer Lampe mit einem einen Klasse-E-Konverter aufweisenden elektronischen Vorschaltgeräte. Dies gilt auch, ohne dass es im Einzelnen noch explizit erwähnt wird.

Die Erfindung bezieht sich also grundsätzlich auch auf ein Verfahren zum Betrieb einer Lampe mit einem elektronischen Vorschaltgerät, welches einen ein Schaltelement aufweisenden Klasse-E-Konverter zur Leistungsversorgung der anzuschließenden Lampe aufweist, mit dem Schritt: Erzeugen eines Ausgangsstromes mit dem Klasse-E-Konverter bei angeschlossener Lampe, wobei dieser Ausgangsstrom nach dem Ausschalten des Schaltelementes eine erste und eine zweite Halbwelle entgegengesetzter Polarität aufweist, dadurch gekennzeichnet, dass das Verfahren die weiteren Schritte aufweist: Messen des Ausgangsstromes mit einer Messvorrichtung des elektronischen Vorschaltgerätes, Einstellen eines Einschaltzeitpunktes des Schaltelementes mit einer Regelvorrichtung, Bestimmen eines ersten Ausgangsstromwertes der ersten Halbwelle und eines zweiten Ausgangsstromwertes der zweiten Halbwelle mit der Messvorrichtung und Einstellen des Einschaltzeitpunktes mit der Regelvorrichtung, wobei der Regelvorrichtung eine auf der Abweichung der beiden Ausgangsstromwerte basierende Regelgröße zugeführt wird.

### Kurze Beschreibung der Zeichnungen

Im Folgenden soll die Erfindung anhand eines Ausführungbeispieles näher erläutert werden. Die dabei offenbarten Einzelmerkmale können auch in anderen Kombinationen erfindungswesentlich sein.
- Figur 1a: zeigt die Ausgangsspannung als Funktion der Zeit im Falle eines Klasse-E-Konverters im resonanzen Betrieb.
- Figur 1b: zeigt den Ausgangsstrom des Klasse-E-Konverters aus Figur 1a.
- Figur 2a: zeigt die Ausgangsspannung als Funktion der Zeit im Falle eines Klasse-E-Konverters im nicht-resonanten Betrieb für ein erfindungsgemäßes elektronisches Vorschaltgerät.
- Figur 2b: zeigt den Figur 2a entsprechenden Ausgangsstrom des Klasse-E-Konverters.
- Figur 3: zeigt ein Schaltbild einer erfindungsgemäßen Messvorrichtung.
- Figur 4: zeigt ein Schaltbild eines Klasse-E-Konverters mit einer erfindungsgemäßen Steuervorrichtung und einer transformatorisch an den Klasse-E-Konverter gekoppelten Lampe.
- Figur 5: zeigt eine Variation der Messvorrichtung aus Figur 3, den Klasse-E-Konverter, die Steuervorrichtung aus Figur 4 und eine angeschlossene Lampe in einem gemeinsamen, eine Ausführungsform der Erfindung darstellenden Schaltbild.

### Bevorzugte Ausführung der Erfindung

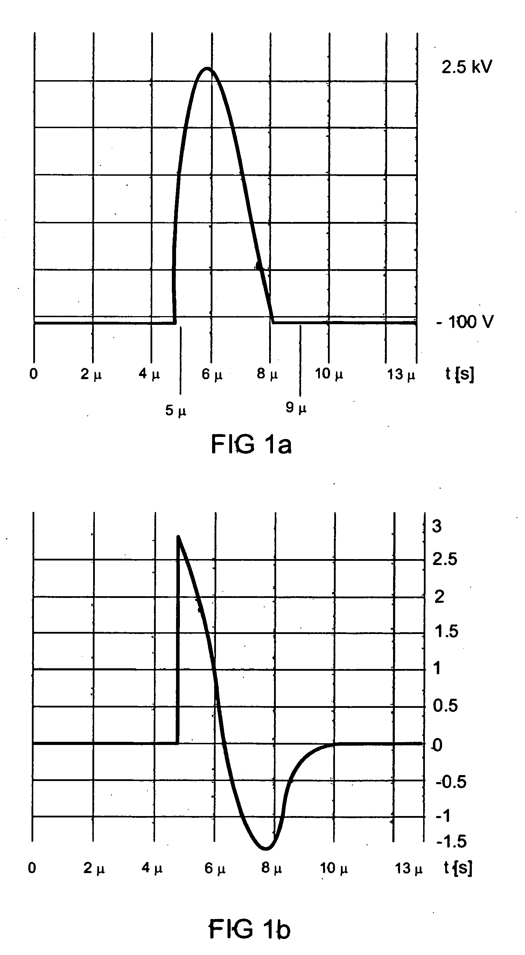

Die Figuren 1a und 1b zeigen die Ausgangsspannung und den Ausgangsstrom eines Klasse-E-Konverters nach dem Stand der Technik.

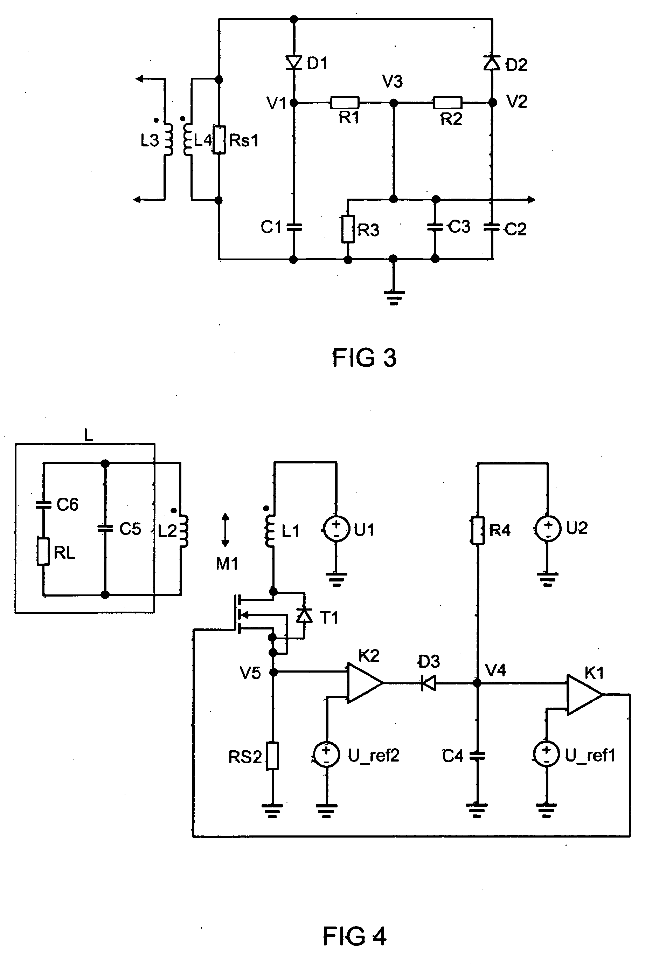

Zur Erläuterung der Figuren 1a und 1b wird hier ein Teil der Figur 4 mit einbezogen, welche das Schaltbild eines Klasse-E-Konverters zeigt.

Der in der Figur 4 gezeigte Klasse-E-Konverter wandelt eine konstante Gleichspannung in eine gepulste Gleichspannung um. Er weist eine Gleichspannungsversorgung U1 eine Speicherspule L1 und ein Schaltelement, hier einen MOSFET, T1 auf. Ist das Schaltelement T1 eingeschaltet, so nimmt der Strom durch die Speicherspule L1 mit der Zeit zu. Wird das Schaltelement T1 geöffnet, so ändert sich der Strom durch die Speicherspule L1 abrupt. Die in der Speicherspule L1 gespeicherte Energie kann über eine sekundäre Spule L2 ausgekoppelt und einer angeschlossenen Lampe L zugeführt werden. Das Schaltelement T1 kann resonant und nicht-resonant betrieben werden.

Figur 1a zeigt, wie bei etwa 5 µs die Spannung über der sekundären Spule L2 aufgrund des Ausschaltens des Schaltelementes T1 schnell von -100 V bis auf 2,5 kV ansteigt und danach innerhalb von 3 µs wieder auf den Ausgangswert von -100 V abfällt. Ein solcher Spannungsverlauf ist typisch für die hier angeschlossene DBD-Lampe. Das Schaltelement T1 wird erst im Anschluss an diesen Spannungspuls wieder eingeschaltet.

Figur 1b zeigt den zu Figur 1a passenden Strom durch die sekundäre Spule L2. Dieser kann in zwei Halbwellen unterteilt werden: Während der ersten Halbwelle findet eine erste Zündung des Entladungsmediums in der Lampe L statt. Durch den Aufbau einer Gegenpolarisation in dem Entladungsmedium und ein Zurückschwingen der Ladung durch den Sekundärkreis, also den Lastkreis der Lampe, erfolgt eine zweite Zündung während der zweiten Halbwelle. Eine detaillierte Beschreibung hierzu findet sich in der WO 00/13204.

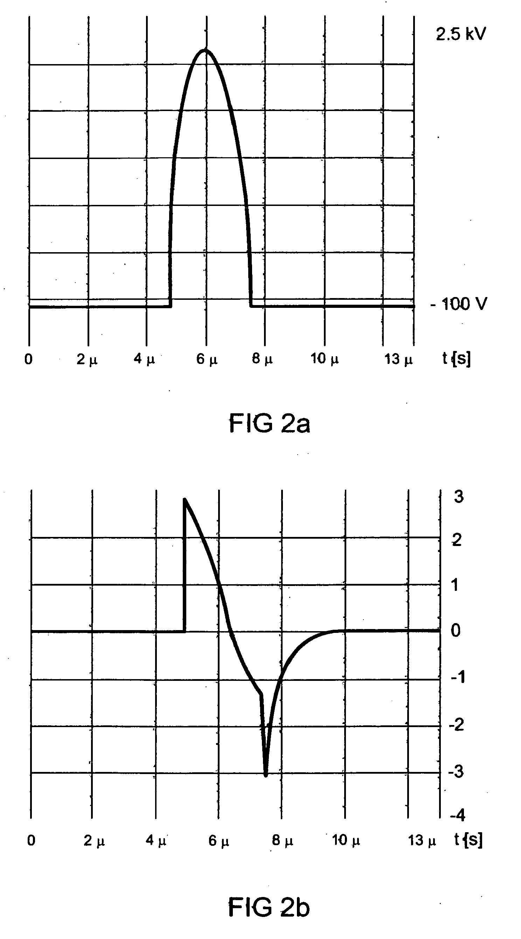

Im Unterschied zu den Figuren 1a und 1b wird bei den Figuren 2a und 2b der Klasse-E-Konverter nicht-resonant betrieben, d. h. dass das Schaltelement wieder eingeschaltet wird, bevor der über der sekundären Spule L2 abfallende Spannungspuls abgeklungen ist. In Figur 2a kann man erkennen, dass der Spannungspuls an seiner fallenden Flanke durch das Einschalten des Schaltelementes T1 abgeschnitten ist und die Spannung noch steiler als in Figur 1a abfällt. Figur 2b zeigt den zu Figur 2a passenden Strom durch die sekundäre Spule L2. Im Vergleich zu Figur 1a hat sich die Form der zweiten Halbwelle verändert. Die Stromschwingung hat nun keinen weichen, rundlichen Verlauf mehr, sondern zeigt einen ausgeprägten Peak. Der Peak entsteht durch das Einschalten des Schaltelementes T1 während der steil abfallenden Flanke des Ausgangsspannungspulses. Dieses Einschalten des Schaltelementes T1 unterstützt das Zurückschwingen der Ladung in dem Lampenlastkreis. Dadurch hat sich der Spitzenwert der zweiten Halbwelle in etwa verdoppelt.

Bei dem erfindungsgemäßen elektronischen Vorschaltgerät wird der Klasse-E-Konverter nicht-resonant, also gemäß den Figuren 2a und 2b, betrieben. In der Beschreibungseinleitung wurde festgestellt, dass sich die in die Lampe einkoppelbare Leistung im nicht-resonanten Betrieb mit dem Einschaltzeitpunkt ändert. Weiter ändern sich der Verlauf und insbesondere die Spitzenwerte der Halbwellen mit einer Variation des Einschaltzeitpunktes des Schaltelementes.

In diesem Beispiel wird diese Spitzenwertveränderung zur Regelung der Ausschaltzeit, also des Zeitintervalls zwischen dem Ausschalten und dem Wiedereinschalten des Schaltelementes T1, benutzt.

In Figur 3 ist das Schaltbild einer erfindungsgemäßen Messvorrichtung zur Messung und Verarbeitung der Spitzenwerte des Ausgangsstromes des Klasse-E-Konverters gezeigt. Eine Induktivität L3 ist seriell in den Lastkreis der Lampe geschaltet. Sekundär zu der Induktivität L3 weist die Messvorrichtung eine Induktivität L4 auf. Parallel zu dieser Induktivität L4 ist ein Messwiderstand RS1 geschaltet. Die über dem Meßwiderstand RS1 abfallende Spannung ist proportional zu dem durch den Lastkreis der Lampe fließenden Strom, also dem Ausgangsstrom des Klasse-E-Konverters. Parallel zu dem Messwiderstand RS1 ist eine Serienschaltung aus einer Diode D1 und einem Kondensator C1 geschaltet. Die Diode D1 sperrt in eine Richtung, so dass der Kondensator C1 den Spitzenwert über dem Messwiderstand RS1 für eine der beiden Halbwellen des Ausgangsstromes des Klasse-E-Konverters speichert.

Parallel zu der vorangehenden Serienschaltung ist eine Serienschaltung aus einem zweiten Kondensator C2 und einer umgekehrt gepolten zweiten Diode D2 geschaltet. In dem zweiten Kondensator C2 wird der Spitzenwert über dem Messwiderstand RS1 der anderen Halbwelle gespeichert.

Zwischen einen Verbindungsknoten V1 zwischen der ersten Diode D1 und dem ersten Kondensator C1 und einen weiteren Verbindungsknoten V2 zwischen der zweiten Diode D2 und dem zweiten Kondensator C2 ist eine Serienschaltung aus zwei Widerständen R1 und R2 geschaltet. Ein dritter Kondensator C3 ist zwischen einen Verbindungsknoten V3 zwischen den Widerständen R1 und R2 und das Bezugspotential geschaltet. Über diese Widerstände R1 und R2 wird ein Strom erzeugt, der der Differenz der aus den Kondensatorren C1 und C2 abfließenden Ströme entspricht. Der Differenzstrom wird in diesem dritten Kondensator C3 integriert. Parallel zu dem dritten Kondensator C3 ist ein dritter Widerstand R3 geschaltet, über den sich der Kondensator C3 entladen kann.

Die an dem dritten Kondensator C3 anliegende Spannung entspricht einem zeitlichen Integral über die Differenz der in den Kondensatoren C1 und C2 gespeicherten Spitzenwerte. Da der Kondensator C3 sich allerdings über den Widerstand R3 entlädt, werden die Differenzen bei der Integration zeitlich gewichtet. Den größten Einfluss hat die aktuelle Differenz zwischen den beiden Spitzenwerten, während vergangene Differenzen sich mit größer werdendem zeitlichen Abstand immer weniger auf die Spannung über dem Kondensator C3 auswirken. Die über dem Kondensator C3 abfallende Spannung stellt eine Regelgröße für das erfindungsgemäße elektronische Vorschaltgerät dar.

Figur 4 zeigt ein Schaltbild eines Teils eines erfindungsgemäßen elektronischen Vorschaltgerätes mit dem Ersatzschaltbild einer angeschlossenen Lampe.

Der Klasse-E-Konverter mit der Speicherspule L1, dem Schaltelement T1 und einem Messwiderstand RS2 wird über eine Gleichspannungsversorgung U1 mit einer Leistung versorgt. Die Speicherspule L1, das Schaltelement T1 und der Messwiderstand RS2 sind in dieser Reihenfolge zwischen das positive Versorgungspotential U1 und das Bezugspotential geschaltet. Über die zu der Speicherspule L1 sekundäre Spule L2 wird Leistung in die Lampe L eingekoppelt.

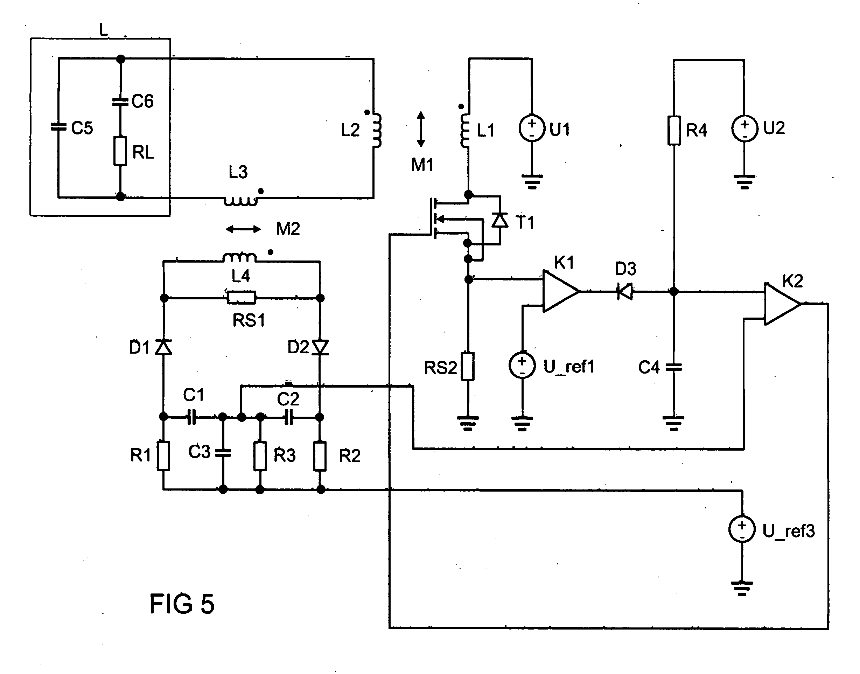

Der Ausgang eines ersten Schwellenwertelementes, hier ein Komparator K1, ist mit dem Steuereingang des Schaltelementes T1 verschaltet, so dass das Schwellenwertelement K1 das Schaltelement T1 aus- und einschalten kann. An einem invertierenden Eingang des ersten Schwellenwertelementes K1 liegt eine Referenzspannung U_ref1 an. Die als Schwellenwert fungierende Referenzspannung U_ref1 wird hier gebildet aus der Ausgabe der Meßvorrichtung und einem Offset (s. Figur 5). An einem nicht-invertierenden Eingang liegt die Spannung über einem vierten Kondensator C4 an. Dieser vierte Kondensator C4 ist über einen Widerstand R4 mit einer Spannungsquelle U2 verschaltet, wobei die Serienschaltung aus dem Widerstand R4 und dem vierten Kondensator C4 zwischen das positive Versorgungspotential U2+ der Gleichspannungsquelle U2 und das Bezugspotential geschaltet ist. Der nicht-invertierende Eingang des ersten Schwellenwertelementes K1 ist über einen Mittenabgriff V4 zwischen dem Widerstand R4 und dem Kondensator C4 mit dem Kondensator C4 verschaltet.

Ein zweites Schwellenwertelement K2, ebenfalls ein Komparator, ist mit einem invertierenden Eingang mit einem Verbindungsknoten V5 zwischen dem Schaltelement T1 und einem zu dem Schaltelement T1 seriellen Meßwiderstand RS2 verschaltet, so dass die über dem Messwiderstand RS2 abfallende Spannung dem invertierenden Eingang des zweiten Schwellenwertelementes K2 zugeführt wird. An einem nicht-invertierenden Eingang des zweiten Schwellenwertelementes K2 liegt eine Referenzspannung U_ref2 an. Der Ausgang des zweiten Schwellenwertelementes K1 ist über eine Diode D3 mit dem Verbindungsknoten V4 verbunden, so dass der vierte Kondensator C4 über den Ausgang des Komparators K1 entladen werden kann.

Ein Schaltzyklus des Klasse-E-Konverters läuft in der in Figur 4 gezeigten Schaltung wie folgt ab:

Ist das Schaltelement T1 zunächst eingeschaltet, so nimmt der Strom durch die Spule L1, und den Messwiderstand RS2 zu. Die Speicherspule L1 speichert zunehmend mehr Energie und die Spannung über dem Messwiderstand RS2 steigt. Steigt die Spannung über dem Widerstand RS2 und damit an dem invertierenden Eingang des zweiten Schwellenwertelementes K2 über die Referenzspannung U_ref2, so wird zum einen der vierte Kondensator C4 über den Ausgang des zweiten Schwellenwertelementes K2 unter den Schwellenwert U_ref1 entladen und schaltet zum anderen das zweite Schwellenwertelement K2 das Schaltelement T1 aus. Der durch die Speicherspule L1 fließende Strom ändert sich abrupt und es tritt eine hohe Induktionsspannung über der sekundären Spule L2 auf, welche zur Leistungseinkopplung in die Lampe L führt, wie die Figur 2a zeigt.

Während das Schaltelement T1 sperrt, fließt auch kein Strom durch den Messwiderstand RS2 und die Spannung an dem invertierenden Eingang des zweiten Schwellenwertelementes K2 liegt wieder unterhalb der Spannung U_ref2, so dass der vierte Kondensator C4 nicht weiter entladen wird. Der vierte Kondensator C4 wird nun über den Widerstand R4 von der Spannungsquelle U2 geladen. Die Zeitkonstante dieses Ladevorganges ist durch die Größe des Widerstandes R4 und die Kapazität des Kondensators C4 bestimmt. Steigt die Spannung über dem Kondensator C4 und damit an dem nicht-invertierenden Eingang des ersten Schwellenwertelementes K1 über den Schwellenwert U_ref1, so schaltet das erste Schwellenwertelement K2 das Schaltelement T1 wieder ein und der nächste Schaltzyklus beginnt.

Figur 5 zeigt eine Möglichkeit, wie mit der Messvorrichtung die Spitzenwerte des Ausgangsstromes des Klasse-E-Konverters erfasst und die Regelgröße konkret verwendet werden kann.

Weiter zeigt Figur 5 ein gemeinsames Schaltbild der Messvorrichtung aus Figur 3, der Lampe L, des Klasse-E-Konverters und der Schaltungsanordnung aus Figur 4. Der dritte Kondensator C3 ist zwischen das positive Potential einer Referenzspannungsquelle U_ref3 und den invertierenden Eingang des ersten Schwellenwertelementes K1 geschaltet. Somit wird das Potential der Messschaltung aus Figur 3 um die Potentialdifferenz U_ref3 verschoben. Nach wie vor integriert der dritte Kondensator C3 die Differenz der aus den Spitzenwerterfassungsschaltungen D1, C1, R1 und D2, C2, R2 fließenden Ströme, so dass eine der Regelgröße entsprechende Spannung über dem Kondensator C3 abfällt.

Weichen die in den Spitzenwerterfassungsschaltungen C1, R1 und C2, R2 gespeicherten Spitzenwerte voneinander ab, so wird sich über dem dritten Kondensator C3 eine Spannung ausbilden, welche zu dem positiven Potential der Spannungsquelle U_ref3 hinzuzuziehen oder von diesem abzuziehen ist. Dies entspricht einer Schwellenwertänderung des ersten Schwellenwertelementes K2, welche sich auf die Dauer der Ausschaltzeit auswirkt.

## Patentansprüche

1. Elektronisches Vorschaltgerät zum Betrieb einer Lampe (L) mit einem ein Schaltelement (T1) aufweisenden Klasse-E-Konverter (T1, L1) zur Leistungsversorgung der anzuschließenden Lampe (L),
wobei ein Ausgangsstrom des Klasse-E-Konverters (T1, L1) bei angeschlossener Lampe (L) nach einem Ausschalten des Schaltelementes (T1) eine erste und eine zweite Halbwelle entgegengesetzter Polarität aufweist,
wobei das elektronische Vorschaltgerät eine Messvorrichtung zur Messung des Ausgangsstromes
und eine Regelvorrichtung zum Einstellen eines Einschaltzeitpunktes des Schaltelementes (T1) aufweist,
**dadurch gekennzeichnet, dass** die Messvorrichtung dazu ausgelegt ist, einen ersten Ausgangsstromwert der ersten Halbwelle und einen zweiten Ausgangsstromwert der zweiten Halbwelle zu bestimmen,
und dass der Regelvorrichtung zum Einstellen des Einschaltzeitpunktes eine auf der Abweichung der beiden Ausgangsstromwerte basierende Regelgröße zugeführt ist.

2. Elektronisches Vorschaltgerät nach Anspruch 1, bei der die Messvorrichtung zwei Spitzensaerterfassungsschaltungen (R1, C1, R2, C2) aufweist und dazu ausgelegt ist, als ersten Ausgangsstromwert den Spitzenwert der ersten Halbwelle in der ersten der beiden Spitzenwerterfassungsschaltungen (R1, C1) zu erfassen und als zweiten Ausgangsstromwert den Spitzenwert der zweiten Halbwelle in der zweiten der beiden Spitzenwerterfassungsschaltungen (R2, C2) zu erfassen.

3. Elektronisches Vorschaltgerät nach Anspruch 2, bei der die von der Regelvorrichtung verwendete Sollgröße einer Differenz der Beträge des ersten und des zweiten Spitzenwertes von weniger als 40% des größeren der beiden Spitzenwerte entspricht.

4. Elektronisches Vorschaltgerät nach einem der vorangehenden Ansprüchen, bei der die Messvorrichtung dazu ausgelegt ist, den Ausgangsstrom transformatorisch zu messen.

5. Elektronisches Vorschaltgerät nach einem der vorangehenden Ansprüche, bei der die Messvorrichtung dazu ausgelegt ist, Abweichungen der Ausgangsstromwerte voneinander über mehrere Schaltzyklen des Klasse-E-Konverters (T1, L1) zu mitteln.

6. Elektronisches Vorschaltgerät nach Anspruch 2 und 5, bei der die Spitzenwerte von den Spitzenwerterfassungsschaltungen (R1, C1, R2, C2) in Form von Spannungen erfasst werden und die Spitzehwerterfassungsschaltungen (R1, C1, R2, C2) mit einer Parallelschaltung aus einem Mittelungskondensator (C3) und einem Widerstand (R3) so verschaltet sind, dass die Spannung über dem Mittelungskondensator (C3) einen zeitabstandsgewichteten Mittelwert über Betragsdifferenzen der beiden Spitzenwerte vergangener Schaltzyklen des Klasse-E-Konverters darstellt.

7. Elektronisches Vorschaltgerät nach einem der vorangehenden Ansprüche, bei dem die Regelvorrichtung eine Steuervorrichtung zum Schalten des Schaltelementes (T1) mit einem ersten Schwellenwertelement (K1) umfasst, wobei einem ersten Eingang des Schwellenwertelementes (K1) die Regelgröße zugeführt wird und das Schwellenwertelement so mit dem Schaltelement (T1) verschaltet ist, dass das erste Schwellenwertelement (K1) das Schaltelement (T1) schalten kann.

8. Elektronisches Vorschaltgerät nach Anspruch 7, bei der die Steuervorrichtung aufweist:
- einen Kondensator (C4),
- ein zweites Schwellenwertelement (K2) und
- eine Spannungsquelle (U2),
wobei
- an einem Eingang des.zweiten Schwellenwertelementes (K2) ein den Strom durch das Schaltelement (T1) darstellendes Signal anliegt,
- das zweite Schwellenwertelement (K2) mit dem Kondensator (C4) so verschaltet ist, dass beim Erreichen des Schwellenwertes am Eingang des zweiten Schwellenwertelementes (K2) der Kondensator (C4) in einem ersten Sinn umgeladen wird,
- das erste Schwellenwertelement (K1) einen zweiten Eingang aufweist und der Kondensator mit einem der beiden Eingänge so verschaltet ist, dass ein dem Ladezustand des Kondensators (C4) proportionales Signal diesem Eingang zugeführt wird,
und wobei die Regelvorrichtung so ausgelegt ist, dass
- das Schaltelement (T1) aufgrund des ersten Umladens des Kondensators (C4) über das erste Schwellenwertelement (K1) ausgeschaltet wird,
- der Kondensator (C4) über die Spannungsquelle (U2) in dem anderen, zweiten, Sinn umgeladen wird, und
- das erste Schwellenwertelement (K2) das Schaltelement (T1) aufgrund des zweiten Umladens des Kondensators (C4) wieder einschaltet,
so dass die Umladezeit des zweiten Umladens des Kondensators (C4) die Ausschaltzeit bestimmt.

9. Elektronisches Vorschaltgerät nach Anspruch 7 oder 8, bei der die beiden Schwellenwertelemente (K1, K2) der Regelvorrichtung Komparatoren (K1,K2) sind.

10. Elektronisches Vorschaltgerät nach Anspruch 9, bei der die Steuervorrichtung dazu ausgelegt ist, den Kondensator (C4) über den Ausgang des zweiten Schwellenwertelementes (K1) zu entladen.

11. Elektronisches Vorschaltgerät nach einem der vorangehenden Ansprüche zum Betrieb einer dielektrisch behinderten Entladungslampe (L).

12. Beleuchtungssystem aus einem elektronischem Vorschaltgerät nach einem der vorangehenden Ansprüche und einer mit diesem elektronischen Vorschaltgerät verwendbaren Lampe (L).

## Claims

1. Electronic ballast for operating a lamp (L) with a class E converter (T1, L1) having a switching element (T1) for supplying power to the lamp (L) to be connected, an output current of the class E converter (T1, L1), when the lamp (L) is connected and once the switching element (T1) has switched off, having a first and a second half-cycle of opposite polarity, the electronic ballast having a measurement apparatus for measuring the output current and a regulating apparatus for setting a switch-on time of the switching element (T1), **characterized in that** the measurement apparatus is designed to determine a first output current value of the first half-cycle and a second output current value of the second half-cycle, and **in that** the regulating apparatus for setting the switch-on time is supplied a controlled variable based on the discrepancy between the two output current values.

2. Electronic ballast according to Claim 1, in which the measurement apparatus has two peak value detection circuits (R1, C1, R2, C2) and is designed to detect, as the first output current value, the peak value of the first half-cycle in the first of the two peak value detection circuits (R1, C1) and to detect, as the second output current value, the peak value of the second half-cycle in the second of the two peak value detection circuits (R2, C2).

3. Electronic ballast according to Claim 2, in which the setpoint variable used by the regulating apparatus corresponds to a difference in the absolute values of the first and the second peak value of less than 40% of the greater of the two peak values.

4. Electronic ballast according to one of the preceding claims, in which the measurement apparatus is designed to measure the output current using transformers.

5. Electronic ballast according to one of the preceding claims, in which the measurement apparatus is designed to take the mean of the discrepancies between the output current values over a plurality of switching cycles of the class E converter (T1, L1) .

6. Electronic ballast according to Claims 2 and 5, in which the peak values are detected by the peak value detection circuits (R1, C1, R2, C2) in the form of voltages, and the peak value detection circuits (R1, C1, R2, C2) are interconnected with a parallel circuit comprising an averaging capacitor (C3) and a resistor (R3) in such a way that the voltage across the averaging capacitor (C3) represents a time-interval-weighted mean value over differences in absolute value between the two peak values of previous switching cycles of the class E converter.

7. Electronic ballast according to one of the preceding claims, in which the regulating apparatus comprises a control apparatus for switching the switching element (T1) with a first threshold value element (K1), the controlled variable being supplied to a first input of the threshold value element (K1), and the threshold value element being interconnected with the switching element (T1) in such a way that the first threshold value element (K1) can switch the switching element (T1).

8. Electronic ballast according to Claim 7, in which the control apparatus has:
- a capacitor (C4),
- a second threshold value element (K2) and
- a voltage source (U2),
- a signal, which represents the current through the switching element (T1), being present at an input of the second threshold value element (K2),
- the second threshold value element (K2) being interconnected with the capacitor (C4) in such a way that, when the threshold value is reached at the input of the second threshold value element (K2), the charge of the capacitor (C4) is reversed in a first direction,
- the first threshold value element (K1) has a second input, and the capacitor is interconnected with one of the two inputs in such a way that a signal, which is proportional to the state of charge of the capacitor (C4), is supplied to this input,
and the regulating apparatus being designed in such a way that
- the switching element (T1) is switched off owing to the first charge reversal of the capacitor (C4) via the first threshold value element (K1),
- the charge of the capacitor (C4) is reversed in the other, second direction via the voltage source (U2),
- the first threshold value element (K2) switches the switching element (T1) on again owing to the second charge reversal of the capacitor (C4),
with the result that the charge-reversal time of the second charge reversal of the capacitor (C4) determines the switch-off time.

9. Electronic ballast according to Claims 7 and 8, in which the two threshold value elements (K1, K2) of the regulating apparatus are comparators (K1, K2).

10. Electronic ballast according to Claim 9, in which the control apparatus is designed to discharge the capacitor (C4) via the output of the second threshold value element (K1).

11. Electronic ballast according to one of the preceding claims for operating a dielectric barrier discharge lamp (L).

12. Lighting system comprising an electronic ballast according to one of the preceding claims, and a lamp (L) which can be used with this electronic ballast.

## Revendications

1. Ballast électronique pour faire fonctionner une lampe ayant un convertisseur (T1, L1) de classe E comprenant un élément (T1) de commutation pour l'alimentation en puissance de la lampe (L) à raccorder,
dans lequel un courant de sortie du convertisseur (T1, L1) de classe E a, lorsque la lampe (L) est raccordée après un blocage de l'élément (T1) de commutation, une première et une deuxième demi-onde de polarité opposée,
dans lequel le ballast électronique a un dispositif de mesure du courant de sortie
et un dispositif de régulation pour établir un instant où l'élément (T1) de commutation passe à l'état passant,
**caractérisé en ce que** le dispositif de mesure est conçu pour déterminer une première valeur du courant d'entrée de la première demi-onde et une deuxième valeur du courant d'entrée de la deuxième demi-onde et **en ce que** l'on envoie au dispositif de régulation, pour régler l'instant de mise à l'état passant, une grandeur de régulation reposant sur l'écart entre les deux valeurs du courant de sortie.

2. Ballast électronique suivant la revendication 1, dans lequel le dispositif de mesure a deux circuits (R1, C1, R2, C2) de détection de valeur de crête et est conçu pour détecter, comme première valeur du courant d'entrée, la valeur de crête de la première demi-onde dans le premier des deux circuits (R1, C1) de détection de valeur de crête et pour détecter, comme deuxième valeur du courant de sortie, la valeur de crête de la deuxième demi-onde dans le deuxième des deux circuits (R2, C2) de détection de valeur de crête.

3. Ballast électronique suivant la revendication 2, dans lequel la grandeur de consigne utilisée par le dispositif de régulation correspond à une différence entre les valeurs absolues de la première et de la deuxième valeur de crête de moins de 40% de la plus grande des deux valeurs de crête.

4. Ballast électronique suivant l'une des revendications précédentes, dans lequel le dispositif de mesure est conçu pour mesurer par transformateur le courant de sortie.

5. Ballast électronique suivant l'une des revendications précédentes, dans lequel le dispositif de mesure est conçu pour faire la moyenne des écarts des valeurs de courant de sortie les uns par rapport aux autres sur plusieurs cycles de commutation du convertisseur (T1, L1) de classe E.

6. Ballast électronique suivant la revendication 2 et 5, dans lequel les valeurs de crête sont détectées par les circuits (R1, C1, R2, C2) de détection de valeur de crête sous la forme de tension, les circuits (R1, C1, R2, C2) de détection de valeur de crête sont montés avec un circuit parallèle composé d'un condensateur (C3) pour faire une moyenne et d'une résistance (R3) de sorte que la tension aux bornes du condensateur (C3) pour faire une moyenne représente une valeur moyenne pondérée dans le temps sur des différences de valeur absolue entre les deux valeurs de crête de cycle de commutation passé du convertisseur de classe E.

7. Ballast électronique suivant l'une des revendications précédentes, dans lequel le dispositif de régulation comprend le dispositif de commande pour relier l'élément (T1) de commutation à un premier élément (K1) à valeur de seuil, une première entrée de l'élément (K1) à valeur de seuil, la grandeur de régulation étant envoyée à une première entrée de l'élément (K1) à valeur de seuil et l'élément à valeur de seuil étant relié à l'élément (T1) de commutation de manière à ce que le premier élément (K1) à valeur de seuil puisse mettre l'élément (T1) de commutation à l'état passant.

8. Ballast électronique suivant la revendication 7, dans lequel le dispositif de commande comprend :
- un condensateur (C4),
- un deuxième élément (K2) à valeur de seuil et
- une source (U2) de tension,
dans lequel
- sur une entrée du deuxième élément (K2) à valeur de seuil s'applique un signal représentant le courant passant dans l'élément (T1) de commutation,
- le deuxième élément (K2) à valeur de seuil est relié au condensateur C4) de sorte que, lorsque la valeur de seuil est atteinte à l'entrée du deuxième élément (K2) à valeur de seuil, le condensateur (C4) est rechargé dans un premier sens,
- le premier élément (K1) à valeur de seuil a une deuxième entrée et le condensateur est relié à l'une des deux entrées de sorte qu'un signal proportionnel à l'état de charge du condensateur (C4) est envoyé à cette entrée,
et dans lequel le dispositif de régulation est conçu de façon à ce que
- l'élément (T1) de commutation soit bloqué en raison de la première recharge du condensateur (C4) par l'intermédiaire du premier élément (K1) à valeur de seuil,
- le condensateur (C4) est rechargé dans l'autre deuxième sens par l'intermédiaire de la source, (U2) deux de tension, et
- le premier élément (K2) à valeur de seuil de l'élément (T1) de commutation est remis à l'état passant en raison de la deuxième recharge du condensateur (C4), de sorte que la durée de recharge de la deuxième recharge du condensateur (C4) détermine le temps de blocage.

9. Ballast électronique suivant la revendication 7 ou 8, dans lequel les deux éléments (K1, K2) à valeur de seuil du dispositif de régulation sont des comparateurs (K1, K2).

10. Ballast électronique suivant la revendication 9, dans lequel le dispositif de commande est conçu pour décharger le condensateur (C4) par l'intermédiaire de la sortie du deuxième élément (K1) à valeur de seuil.

11. Ballast électronique suivant l'une des revendications précédentes pour faire fonctionner une lampe (L) à décharge rendue incomplète par voie diélectrique.

12. Système d'éclairage composé d'un ballast électronique suivant l'une des revendications précédentes et d'une lampe (L) pouvant être utilisée avec ce ballast électronique.
